# FASCICULE DE BREVET EUROPEEN

(11) **EP 0 706 248 B1**
(45) Date de publication et mention de la délivrance du brevet: **04.11.1998**
(21) Numéro de dépôt: 95410097.0
(22) Date de dépôt: 05.09.1995
(51) Int. Cl.: H02B 13/045

(54) **Jonction étanche au gaz entre ouvertures circulaires adjacentes des réservoirs de gaz à basse pression**
Gasdichte Verbindung zwischen benachbarten, kreisformigen Öffnungen von Niederdruckgasbehältern
Gas-tight junction between adjacent circular orifices of low pressure gas reservoirs

(30) Priorité: 27.09.1994 IT MI941964
(43) Date de publication de la demande: 10.04.1996
(73) Titulaire: SCHNEIDER ELECTRIC SA, 92100 Boulogne Billancourt (FR)
(72) Inventeur: Bellone, Giulio, F-38050 Grenoble Cedex 09 (FR)
(74) Mandataire: Hecké, Gérard

(56) Documents cités:
- DE-A- 3 030 021
- DE-A- 3 237 852
- DE-U- 7 731 063
- DE-U- 8 904 074

## Description

La présente invention se réfère à une jonction pour la connexion étanche au gaz des ouvertures circulaires adjacentes des réservoirs contenant du gaz à basse pression. D'après l'invention, la jonction est tout particulièrement applicable à des ouvertures circulaires ayant un diamètre suffisant pour permettre le passage d'organes ou de dispositifs mécaniques qui intéressent tous les réservoirs connectés.

Il arrive en effet assez fréquemment de devoir connecter deux ou plusieurs réservoirs de gaz, pas tellement et pas uniquement pour permettre la connexion du fluide entre ces réservoirs, mais surtout pour pouvoir disposer entre eux des appareillages et des organes mécaniques qui à cause de leurs dimensions ou de leur utilisation doivent demeurer dans les deux réservoirs ou bouger librement entre eux, tout en maintenant en revanche une parfaite étanchéité au gaz des dits réservoirs.

Un cas typique dans lequel se présente ce problème est celui des cellules à barres des tableaux de moyenne tension isolés du gaz. Dans ces constructions on utilise en effet, pour les conducteurs de tension, des barres assez longues (jusqu'à 10 m par exemple) afin de pouvoir alimenter en même temps plusieurs tableaux à moyenne tension, ayant des fonctions identiques ou différentes mais qui sont traversés par les dites barres. Dans le cas de tableaux isolés pour le gaz, qui sont aujourd'hui de plus en plus répandus, il est par conséquent évident que se pose le problème de la réalisation d'un réservoir qui puisse renfermer en situation d'étanchéité au gaz aussi bien les barres des conducteurs de tension que les appareillages de dérivation et de contrôle des différents tableaux. Un réservoir dont les dimensions permettent de contenir les barres en entier pose cependant une série de problèmes pour le transport, l'installation ainsi que l'entretien et il n'est par conséquent pratiquement jamais utilisé.

Il est en effet beaucoup plus pratique et rapide d'avoir des réservoirs individuels préfabriqués pour chaque tableau, ayant des dimensions modulaires, qui sont disposés côte à côte au nombre et du type souhaité pour chaque cas individuel. Il est cependant évident que dans ce cas les dits réservoirs devront chacun comprendre deux ouvertures latérales opposées dont les dimensions doivent être suffisantes pour permettre le passage des barres des conducteurs de tension et en outre ces ouvertures devront comprendre des moyens de jonction étanches pour réaliser l'étanchéité au gaz nécessaire au réservoir multiple ainsi obtenu.

Selon la technique connue, par exemple tel que décrit dans le document DE-U- 8 904 074, ces jonctions sont effectuées grâce à l'interposition de garnitures appropriées entre deux réservoirs mis côte à côte et qui sont serrées par une couronne de vis. Le nombre de vis doit être plutôt élevé - étant donné que la tôle qui constitue les réservoirs est assez fine - afin de garantir une compression constante sur la garniture et par conséquent une bonne étanchéité sur tout le périmètre de la jonction. Cette solution ne s'est pas toutefois révélée suffisamment pratique et commode. Il ne faut pas oublier en effet que les différents réservoirs qui contiennent les tableaux ont individuellement des dimensions plutôt limitées et de plus, pour des raisons de sécurité, sont installés dans des positions et des orientations qui ne sont pas faciles d'accès à l'intérieur de la cabine. L'opération de serrage des jonctions ci-dessus mentionnée est par conséquent plutôt longue et peu commode.

Cet inconvénient provoque tout d'abord un ralentissement considérable des opérations d'installation des tableaux pendant leur montage initial, mais il est plus particulièrement ressenti par la suite pendant la phase de manutention de ces mêmes tableaux. Lorsqu'en effet un des tableaux doit être remplacé à cause d'une panne, il est primordial que les opérations de démontage et de remontage de celui-ci - qui naturellement ne peuvent être faites qu'après avoir effectué la mise hors tension et retiré les barres - puissent être effectuées assez rapidement, afin de réduire au minimum des interruptions de courant sur la ligne qui sont toujours indésirables et coûteuses.

Un autre inconvénient connu de ces garnitures est dû au fait que l'alignement des différents modules ne peut être réalisé que dans des positions angulaires discrètes et bien déterminées, dans lesquelles sera réalisée la superposition des trous pour le logement des vis de fixation, prévus dans les parois adjacentes de deux modules limitrophes. Les déplacements angulaires d'une ampleur non prédéterminée entre les modules adjacents restent par conséquent impossibles, alors qu'ils seraient souvent utiles pour pouvoir réaliser plus facilement ou plus rapidement l'assemblage des modules ou simplement pour avoir un accès plus facile aux organes de commande qui sont à l'intérieur du tableau.

Un dernier inconvénient apparaît dans les garnitures comportant une couronne de vis qui ont été décrites précédemment, à cause du fait que les différents trous destinés au logement des vis constituent en eux-mêmes des voies de fuites ultérieures possibles pour les gaz contenus dans les tableaux. Il est alors nécessaire d'assurer l'étanchéité au niveau de ces vis de fixation afin d'empêcher ces fuites.

Il est par conséquent très important de pouvoir disposer de jonctions utilisables dans les connexions en série des réservoirs étanches au gaz qui puissent être montées et démontées rapidement, à l'aide d'un outil simple et dans une position commode pour l'opérateur, en ayant la possibilité d'effectuer un réglage libre de la position angulaire réciproque des réservoirs connectés par la jonction et sans qu'il y ait de trous dans les parois de ces mêmes réservoirs.

L'inventeur s'est par conséquent posé le problème de réaliser une jonction de ce type qui puisse être montée et démontée très facilement lorsque les différents réservoirs sont déjà positionnés, indépendamment de la position réciproque des réservoirs connectés, et qui assure une excellente étanchéité au gaz aux pressions de fonctionnement des gaz contenus dans les tableaux (normalement de l'hexafluorure de soufre SF₆, à quelques atmosphères) et aussi indépendamment des dimensions de l'ouverture à laquelle la garniture est appliquée, résolvant ainsi les inconvénients décrits ci-dessus.

Les résultats décrits ci-dessus sont obtenus, d'après la présente invention, au moyen d'une jonction étanche au gaz entre les ouvertures circulaires adjacentes des deux réservoirs de gaz à basse pression, caractérisée par le fait qu'elle comprend : une garniture annulaire étanche au gaz interposée entre les surfaces externes des parois des dits réservoirs à proximité du bord des dites ouvertures ; un anneau rigide apte à servir de butée avec une de ses portions périphériques contre la surface interne de la paroi qui délimite une des dites ouvertures, débordant de l'autre des dites ouvertures avec une portion périphérique d'ancrage opposée ; un anneau flexible ouvert, pouvant être couplé à la dite portion d'ancrage de l'anneau rigide afin de s'interposer entre elle et la surface interne de la paroi qui délimite l'autre des dites ouvertures ; ainsi que les moyens de serrage pour serrer progressivement le dit anneau flexible jusqu'à déterminer un serrage adéquat de la dite garniture annulaire.

L'invention sera mieux comprise dans la description qui va suivre d'une forme préférée de mise en oeuvre, illustrée à titre d'exemple dans les dessins en annexe, dans lesquels :
- la fig. 1 est une vue éclatée en perspective montrant les différentes parties qui constitutives de la jonction selon la présente invention ;

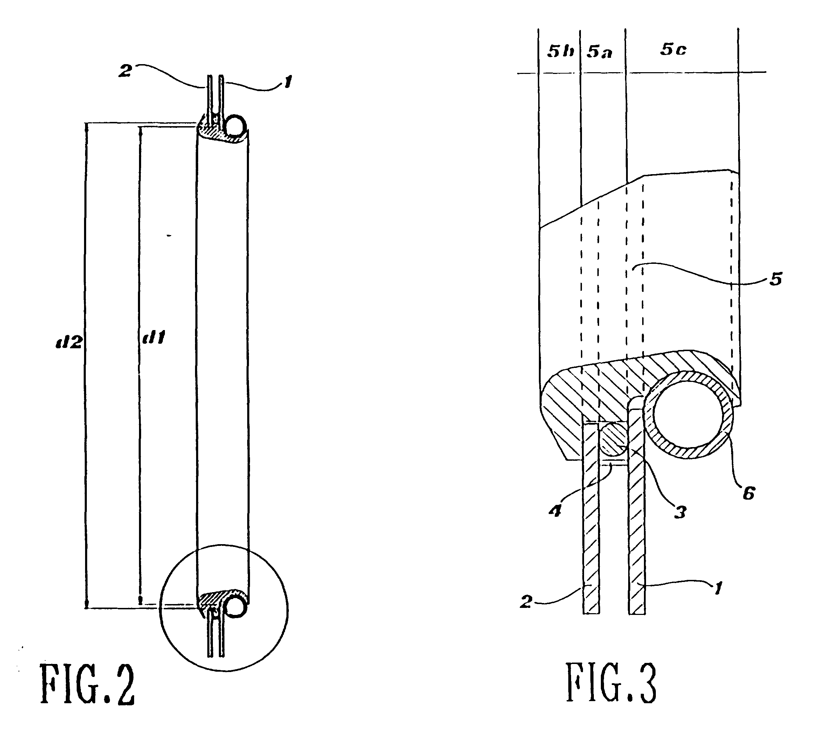

- la fig. 2 est une vue en plan latérale de cette même jonction montée sur un couple de parois flanquées de deux réservoirs de gaz adjacents, en position serrée ;
- la fig. 3 est une vue en coupe, à une échelle plus grande, d'un détail de la figure 2 contenu dans la partie encerclée ;
- la fig. 4 est une vue analogue à la fig. 3, à une échelle encore plus grande, qui illustre la position des parties avant de commencer le serrage de la garniture.

Dans la forme d'exécution retenue qui est illustrée dans les plans, les parois des deux réservoirs adjacents des deux panneaux électriques isolés par rapport au gaz sont indiquées par les références 1 et 2. Dans le but de pouvoir installer la jonction de l'invention, il faut par conséquent pratiquer au préalable des ouvertures circulaires dans ces parois, en tenant compte du fait que le diamètre d₁ de l'ouverture pratiquée dans la paroi 1 doit être légèrement inférieur au diamètre d₂ de l'ouverture pratiquée dans la paroi 2.

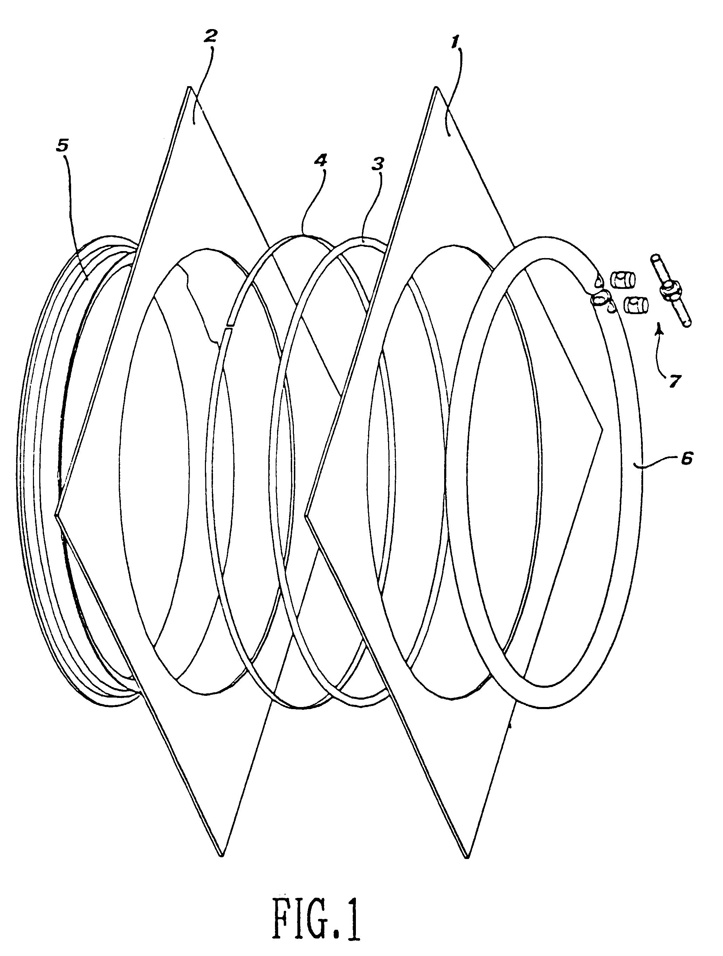

La jonction de l'invention est composée d'une série d'éléments indépendants, clairement illustrés dans la vue éclatée de la fig. 1, et plus précisément une garniture annulaire 3 ayant un diamètre intérieur supérieur au diamètre d₂ défini ci-dessus ; un ruban à anneau 4 de recouvrement de la garniture 3, ayant un diamètre extérieur supérieur à la dite garniture ; un anneau rigide 5 comprenant une partie centrale cylindrique 5a d'un diamètre égal ou légèrement inférieur à d₂ et qui par conséquent peut s'insérer sans jeu ou très peu, entre l'ouverture de la paroi 2 et les portions périphériques opposées 5b et 5c dont les diamètres extérieurs sont respectivement supérieur à d₂ et inférieur à d₁ ; et enfin un anneau flexible ouvert 6 qui est muni d'un moyen de serrage 7, de préférence à vis afin de pouvoir en modifier le diamètre à volonté.

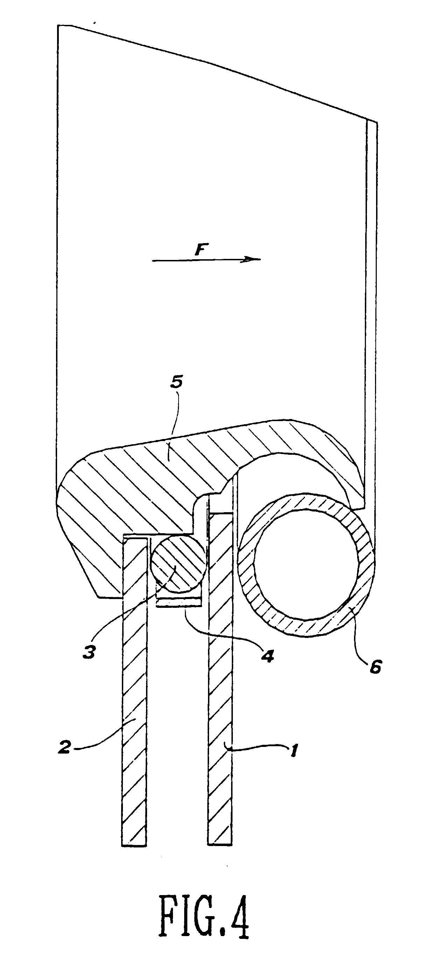

L'anneau rigide 5 comporte une portion centrale cylindrique 5a ayant une hauteur qui est calculée en fonction du degré de déformation que nous voulons impartir à la garniture 3, une fois la jonction serrée. Dans cette position, illustrée à la fig. 3, la partie 5a de l'anneau 5 vient en butée contre la partie extérieure de la paroi 1 et détermine ainsi la distance entre les deux parois 1 et 2 et aussi par conséquent l'espace dont dispose la garniture 3. La portion périphérique 5b est formée par une nervure en porte-à-faux à l'équerre, afin de constituer une butée contre la partie interne de la paroi 2, et détermine par conséquent la position de montage de l'anneau 5. La portion opposée périphérique 5c constitue enfin une base d'ancrage pour l'anneau flexible 6 et présente une forme toroïdale concave. L'anneau rigide 5 peut être réalisé en une seule ou en plusieurs pièces pouvant se connecter les unes aux autres afin de former un tout continu ou même partiellement discontinu, à condition que cette discontinuité ne compromette pas la distribution homogène des efforts sur la paroi 2 d'une part et sur l'anneau flexible 6 d'autre part.

En ce qui concerne l'anneau flexible 6, il est de préférence constitué par un tube continu ayant une section circulaire, mais on peut évidemment utiliser des tubes ayant des sections différentes, variant ainsi selon la convenance la forme de la base de l'anneau 6 dans la portion 5c de l'anneau rigide 5. L'anneau flexible 6 peut enfin être formé, de façon discontinue, par plusieurs portions sphériques, cylindriques ou de toute autre forme connectés entre eux en chaîne.

Les matériaux utilisés pour la construction des deux anneaux 5 et 6 décrits ci-dessus peuvent être de nature métallique ou plastique. Le choix de l'un ou l'autre matériau sera fait en fonction des caractéristiques mécaniques et de résistance à la corrosion souhaitées. Dans le domaine électrique on préférera les matériaux métalliques non ferromagnétiques, comme l'aluminium et ses alliages.

Le montage et le serrage de la jonction d'après la présente invention sont particulièrement simples. En premier lieu il faut positionner l'anneau 4 et la garniture 3 entre les parois 1 et 2. Leur insertion ne présente pas de difficultés particulières, même si leur diamètre est supérieur aux ouvertures dans lesquelles ils sont insérés., étant donné qu'il s'agit d'éléments qui se déforment facilement. Par la suite il faut insérer, du côté de la paroi 2, l'anneau rigide 5 saillant, étant donné que sa portion 5C a un diamètre inférieur aux deux ouvertures et même à l'ouverture 1. Il convient d'insérer l'anneau 5 jusqu'à ce que sa portion 5b vienne en butée contre la paroi 2, de façon à ce que sa portion centrale 5a maintienne en position précise la garniture 3 de l'anneau 4 sans devoir avoir recours pour ces éléments à des dispositifs de fixage provisoires, même lorsque les parois 1 et 2 sont verticales. En effet, le centrage de la garniture 3 et de l'anneau 4 par rapport aux ouvertures des parois 1 et 2 n'a pas une importance particulière pour ce qui concerne l'étanchéité au gaz.

L'anneau flexible 6 est calé sur la portion d'ancrage 5c de l'anneau 5, qui dépasse à l'intérieur du réservoir délimité par la paroi 1, après avoir desserré préalablement les moyens de serrage 7. Dans cette position, l'anneau 6 n'adhère pas encore au fond de sa base dans la portion 5c de l'anneau, mais il bute contre la partie distale de celui-ci et, dans la partie opposée, contre la surface interne de la paroi 1 (fig. 4). En serrant les dispositifs de serrage 7 - qui sont par exemple constitués par une vis à double filetage droit/gauche afin d'augmenter la vitesse de serrage - le diamètre de l'anneau flexible 6 diminue progressivement jusqu'à ce qu'il entre graduellement dans son emplacement. Pendant cette opération de serrage, la totalité de l'anneau 5 est sollicité dans la direction de la flèche F (fig. 4) et en même temps la garniture 3 est comprimée entre les parois 1 et 2 de façon adéquate. Aux termes de l'opération de serrage (fig. 3), la portion 5a de l'anneau 5 vient en butée contre la partie extérieure de la paroi 1, déterminant ainsi la position de fermeture de la jonction. Dans cette position l'anneau de recouvrement 4, dont la hauteur est égale à la hauteur de la partie centrale cylindrique 5a de l'anneau 5 moins l'épaisseur de la paroi 2, est forcé entre les parties externes des parois 1 et 2 formant ainsi, avec ces mêmes parois 1 et 2 et avec l'anneau 5, un emplacement fermé pour loger et contenir la garniture 3.

Le démontage de la garniture, qui ne présente pas de parties collées ou qui seraient fixées de façon permanente par un autre moyen entre elles ou aux parois du réservoir, peut être effectué avec une grande facilité au moyen d'un outil simple, comme un tournevis par exemple, en répétant en sens contraire les opérations vues ci-dessus, et atteignant ainsi pleinement les objectifs de l'invention.

La jonction d'après la présente invention a été décrite en suivant une forme d'exécution préférée, mais il est clair qu'il existe de nombreuses autres solutions qui sont toutes à la portée d'un technicien travaillant dans ce domaine. La forme des portions périphériques de l'anneau 5 ou de l'anneau de serrage 6 peut être modifiée, l'un ou l'autre pouvant être constitué par plusieurs sections unies ou reliées entre elles.

## Revendications

1. Jonction étanche au gaz entre les ouvertures circulaires adjacentes de deux réservoirs de gaz à basse pression,
caractérisée par ce qu'elle comprend :
- une garniture annulaire (3) étanche au gaz interposée entre les surfaces extérieures des parois (1, 2) des dits réservoirs à proximité du bord desdites ouvertures;
- un anneau rigide (5) apte à faire butée par une de ses portions périphériques (5b) contre la surface interne de la paroi (2) qui délimite une desdites ouvertures, dépassant de l'autre desdites ouvertures par une portion opposée périphérique d'ancrage (5c);
- un anneau flexible ouvert (6), que l'on peut coupler à ladite portion d'ancrage (5c) de l'anneau rigide (5) de façon à s'interposer entre elle et la surface interne de la paroi (1) qui délimite l'autre desdites ouvertures;
- et des moyens de serrage (7) pour serrer progressivement ledit anneau flexible (6) jusqu'à arriver au serrage adéquat de ladite garniture annulaire (3).

2. Jonction selon la revendication 1, caractérisée en ce que ledit anneau rigide (5) comprend:
- une portion centrale (5a) cylindrique ayant un diamètre qui peut s'accoupler au diamètre (d) de ladite ouverture;
- une portion périphérique (5b) formée par une nervure en porte-à-faux à équerre et ayant un diamètre supérieur au diamètre (d) des ouvertures;
- et une portion périphérique opposée (5c) formée par une nervure d'ancrage ayant un diamètre inférieur au diamètre (d) des ouvertures.

3. Jonction selon la revendication 1, caractérisée en ce que la première desdites ouvertures possède:
- un diamètre (d₁) inférieur au diamètre (d₂) de la deuxième desdites ouvertures ledit anneau rigide (5) comprenant une portion centrale (5a) cylindrique ayant un diamètre qui peut être couplé au diamètre (d₂) de ladite deuxième ouverture, et apte à faire butée contre la surface extérieure de la paroi qui délimite ladite première ouverture;
- une portion périphérique (5b) formée par une nervure en porte-à-faux à équerre et ayant un diamètre supérieur au diamètre (d₂) de ladite deuxième ouverture;
- et une portion opposée périphérique (5c) formée par une nervure d'ancrage ayant un diamètre inférieur au diamètre (d₁) de ladite première ouverture.

4. Jonction selon l'une quelconque des revendications précédentes, caractérisée en ce qu'elle comprend en outre un ruban en anneau (4) de recouvrement de ladite garniture annulaire (3) étanche, ayant un diamètre supérieur au diamètre extérieur de cette même garniture (3).

5. Jonction selon la revendication 4, caractérisée en ce que la hauteur dudit ruban à anneau (4) est égale ou inférieure à la différence entre la hauteur de la portion centrale (5a) cylindrique de l'anneau rigide (5) et l'épaisseur de la paroi (2) à laquelle ladite portion est couplée.

6. Jonction selon l'une quelconque des revendications précédentes, caractérisée en ce que ladite portion d'ancrage (5c) de l'anneau rigide (5) a une forme toroïdale concave.

7. Jonction selon l'une quelconque des revendications précédentes, caractérisée en ce que ledit anneau flexible ouvert (6) est constitué par un tube continu.

8. Jonction selon l'une quelconque des revendications précédentes, caractérisée en ce que ledit anneau flexible ouvert (6) est constitué par plusieurs éléments connectés entre eux en chaîne.

9. Jonction selon l'une quelconque des revendications précédentes, caractérisée ce que que lesdits moyens de serrage sont constitués par une vis à double filetage droit/gauche.

## Patentansprüche

1. Anordnung zur gasdichten Verbindung der aneinandergrenzenden kreisrunden Öffnungen von zwei Niederdruckgasgehäusen,
dadurch gekennzeichnet ist, daß sie
- ein, zwischen die Außenseiten der Wände (1, 2) der genannten Gehäuse in geringem Abstand zum Rand der genannten Öffnungen eingesetztes, ringförmiges gasdichtes Dichtungselement (3),
- einen biegesteifen Ring (5), der dazu ausgelegt ist, mit einem seiner Umfangsabschnitte (5b) in Anschlag gegen die Innenseite der, eine der genannten Öffnungen begrenzenden Wand (2) geführt zu werden, und mit einem gegenüberliegenden Umfangsabschnitt zur Feststellung (5c) aus der anderen der genannten Öffnungen hervorsteht,
- einen offenen elastischen Ring (6), der mit dem am biegesteifen Ring (5) ausgebildeten, genannten Umfangsabschnitt zur Feststellung (5c) verbunden werden kann, derart daß er sich zwischen diesen Abschnitt und die Innenseite der die andere der genannten Öffnungen begrenzenden Wand (1) schmiegt,
- und Spannmittel (7) zum steigenden Spannen des genannten elastischen Rings (6) bis zum Erreichen des geeigneten Klemmdrucks für das genannte ringförmige Dichtungselement (3) umfaßt.

2. Verbindungsanordnung nach Anspruch 1, dadurch gekennzeichnet, daß der genannte biegesteife Ring (5)
- einen zylindrischen Mittelabschnitt (5a) mit einem Durchmesser, der an den Durchmesser (d) der genannten Öffnung angelegt werden kann,
- einen als abgewinkelten Versteifungskragen ausgebildeten Umfangsabschnitt (5b), dessen Durchmesser größer ist als der Durchmesser (d) der Öffnungen, sowie
- einen als Feststellversteifung ausgebildeten gegenüberliegenden Umfangsabschnitt (5c), dessen Durchmesser kleiner ist als der Durchmesser (d) der Öffnungen umfaßt.

3. Verbindungsanordnung nach Anspruch 1, dadurch gekennzeichnet, daß die erste der genannten Öffnungen einen Durchmesser (d₁) aufweist, der kleiner ist als der Durchmesser (d₂) der zweiten der genannten Öffnungen, wobei der genannte biegesteife Ring (5)
- einen zylindrischen Mittelabschnitt (5a), dessen Durchmesser auf den Durchmesser (d₂) der genannten zweiten Öffnung aufgelegt werden kann und der dazu ausgelegt ist, in Anschlag gegen die Außenseite der die genannte erste Öffnung begrenzenden Wand geführt zu werden,
- einen als abgewinkelten Versteifungskragen ausgebildeten Umfangsabschnitt (5b), dessen Durchmesser größer ist als der Durchmesser (d₂) der genannten zweiten Öffnung, sowie
- einen als Feststellversteifung ausgebildeten gegenüberliegenden Umfangsabschnitt (5c) umfaßt, dessen Durchmesser kleiner ist als der Durchmesser (d₁) der genannten ersten Öffnung.

4. Verbindungsanordnung nach irgendeinem der vorhergehenden Ansprüche, dadurch gekennzeichnet, daß sie darüber hinaus ein Ringband (4) zur Abdeckung des genannten gasdichten Dichtungselements (3) umfaßt, dessen Durchmesser größer ist als der Außendurchmesser dieses Dichtungselements (3).

5. Verbindungsanordnung nach Anspruch 4, dadurch gekennzeichnet, daß die Höhe des genannten Ringbands (4) den gleichen oder einen geringeren Wert aufweist als die Differenz zwischen der Höhe des zylindrischen Mittelabschnitts (5a) des biegesteifen Rings (5) und der Dicke der Wand (2), an die der genannte Abschnitt angelegt ist.

6. Verbindungsanordnung nach irgendeinem der vorhergehenden Ansprüche, dadurch gekennzeichnet, daß der genannte Feststellabschnitt (5c) des biegesteifen Rings (5) als konkave Ringnut ausgebildet ist.

7. Verbindungsanordnung nach irgendeinem der vorhergehenden Ansprüche, dadurch gekennzeichnet, daß der genannte offene elastische Ring (6) aus einem durchgängigen Rohr besteht.

8. Verbindungsanordnung nach irgendeinem der vorhergehenden Ansprüche, dadurch gekennzeichnet, daß der genannte offene elastische Ring (6) aus mehreren kettenartig miteinander verbundenen Elementen besteht.

9. Verbindungsanordnung nach irgendeinem der vorhergehenden Ansprüche, dadurch gekennzeichnet, daß die genannten Spannmittel aus einer Schraube mit Rechts-Links-Doppelgewinde bestehen.

## Claims

1. A gas-tight junction between the adjacent circular openings of two low-pressure gas tanks,
characterized by the fact that it comprises :
- a gas-tight annular seal (3) fitted between the external surfaces of the walls (1, 2) of said tanks near the edge of said openings;
- a rigid ring (5) able to act as a stop by one of its peripheral portions (5b) against the internal surface of the wall (2) which bounds one of said openings, extending beyond the other of said openings by an opposite peripheral securing portion (5c);
- an open flexible ring (6) which can be coupled to said securing portion (5c) of the rigid ring (5) so as to be interposed between the latter and the internal surface of the wall (1) bounding the other of said openings;
- and tightening means (7) to tighten said flexible ring (6) progressively until adequate tightening of said annular seal (3) is achieved.

2. The junction according to claim 1, characterized in that said rigid ring (5) comprises :
- a cylindrical central portion (5a) having a diameter which can be coupled to the diameter (d) of said opening;
- a peripheral portion (5b) formed by a bracketed overhanging rib and having a diameter larger than the diameter (d) of the openings;
- and an opposite peripheral portion (5c) formed by a securing rib having a diameter smaller than the diameter (d) of the openings.

3. The junction according to claim 1, characterized in that the first of said openings has:
- a diameter (d1) smaller than the diameter (d2) of the second of said openings, said rigid ring (5) comprising a cylindrical central portion (5a) having a diameter which can be coupled to the diameter (d2) of said second opening, and able to act as a stop against the extemal surface of the wall which bounds said first opening;
- a peripheral portion (5b) formed by a bracketed overhanging rib and having a diameter larger than the diameter (d2) of said second opening;
- and an opposite peripheral portion (5c) formed by a securing rib having a diameter smaller than the diameter (d1) of said first opening.

4. The junction according to any one of the foregoing claims, characterized in that it comprises in addition a strip in the form of a ring (4) covering said annular gas-tight seal (3), having a diameter greater than the extemal diameter of this same seal (3).

5. The junction according to claim 4, characterized in that the height of said ring (4) is equal to or smaller than the difference between the height of the cylindrical central portion (5a) of the rigid ring (5) and the thickness of the wall (2) to which said portion is coupled.

6. The junction according to any one of the foregoing claims, characterized in that said securing portion (5c) of the rigid ring (5) has a concave toroidal shape.

7. The junction according to any one of the foregoing claims, characterized in that said open flexible ring (6) is formed by a continuous tube.

8. The junction according to any one of the foregoing claims, characterized in that said open flexible ring (6) is formed by several elements connected to one another in a chain.

9. The junction according to any one of the foregoing claims, characterized in that said tightening means are formed by a screw with double right-hand/left-hand thread.
